# EUROPEAN PATENT APPLICATION

(11) **EP 1 531 278 A1**
(43) Date of publication of application: **18.05.2005**
(21) Application number: 04026656.1
(22) Date of filing: 10.11.2004
(51) Int. Cl.: F16D 13/75, F16D 27/00

(54) **A device for compensating wear of the clutch in a motor vehicle**

(30) Priority: 12.11.2003 IT to20030898
(71) Applicant: Aktiebolaget SKF, S-415 50 Göteborg (SE)
(72) Inventor: Geyer, Andreas, 10060 San Secondo di Pinerolo Torino (IT); De Cristofaro, Alessandro, 10127 Torino (IT); Corbett, Richard, 10060 San Secondo di Pinerolo Torino (IT)
(74) Representative: Fioravanti, Corrado

(57) **Abstract**

In a wear compensating device (40), a wedge-shaped stem (41) is connectable at one end (48) thereof to a drive (10, 20) and is movable by the drive in an axial direction between a first position, corresponding to an engaged condition of the clutch, and a second position, corresponding to a disengaged condition of the clutch. The wedge-like stem (41) has an outer side surface (49a) and an inner side surface (49b) inclined obliquely with respect to the axial direction (x). A hollow member (42) for acting against clutch operating lever (L) has an axially elongated cavity (45) movably accommodating the wedge-shaped portion (49) of the stem (41) to allow relative axial movements between the stem (41) and the hollow member (42). An intermediate wedge-shaped locking member (43) for cooperating with the stem (41) and the hollow member (42) is partially accommodated within the cavity (45) beside the stem (41) and has an outer side surface (50a) facing the cavity (45), and a flat and oblique side surface (50b) parallel to and facing the inclined side surface (49b) of the stem (41).

## Description

The present invention relates to a device for compensating wear of the clutch in a motor vehicle.

The present invention is applicable to vehicles in which the clutch is disengaged by means of an actuator which acts on an operating lever which emerges from the outer casing of the clutch or on an intermediate hydraulic control device, for example a master cylinder. If the clutch is not of the self-adjusting type, the initial rest position of the operating lever varies over time as a result of the progressive wear on the clutch. It is therefore necessary to provide a device that compensates for wear on the clutch, in order to ensure that the movement imparted by the actuator always causes the complete disengagement of the clutch, regardless of its degree of wear.

US-5,984,072 discloses an actuator unit of the type specified in the preamble of Claim 1. An actuator is provided with a drive system associated with a crank mechanism which converts the movement of the drive into a translational movement of an output rod hinged to the crank mechanism to cause the disengagement of the clutch. The crank mechanism is coupled to a toggle mechanism which assists in the operation of the clutch. An adjustment device is mounted on the rod to compensate for the wear on the clutch. This device operates on the principle of a wedge stressed by a spring and associated with ball-type locking elements. In the initial position (with the clutch engaged), the wedge is disengaged and allows the components of the device to move relative to each other, to cause a change in the axial length. When the actuator is operated, the wedge locks the relative positions of the components of the device.

The object of the invention is to provide an actuator unit having compact dimensions and consisting of a reduced number of components, while being reliable in operation and economical to manufacture.

This and other objects and advantages, which will be made clearer below, are achieved according to the invention by an integrated actuating unit having the features defined in the attached claims.

The structural and functional characteristics of some preferred, but not restrictive, embodiments of a wear compensating device according to the invention will now be described; reference is made to the attached drawings, in which:
Figure 1 is a partially sectional schematic view of a first embodiment of a wear compensating device coupled to a drive device in an engaged condition of the clutch;
Figure 2 is a perspective view of the devices of figure 1 in a condition in which the clutch is disengaged;
Figure 3 is a partially sectional axial view of the wear compensating device of figures 1 and 2 and a clutch operating lever;
Figure 4 is a partially sectional schematic axial view of a second embodiment of the wear compensation device according to the invention associated with a clutch operating lever; and
Figure 5 is a partially sectional schematic axial view of a third embodiment of the wear compensation device according to the invention associated with a clutch operating lever.

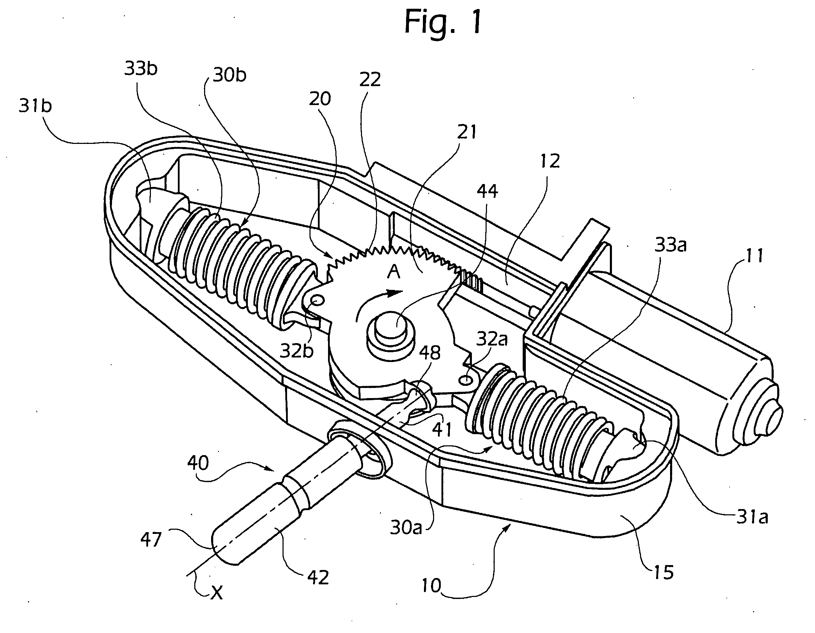

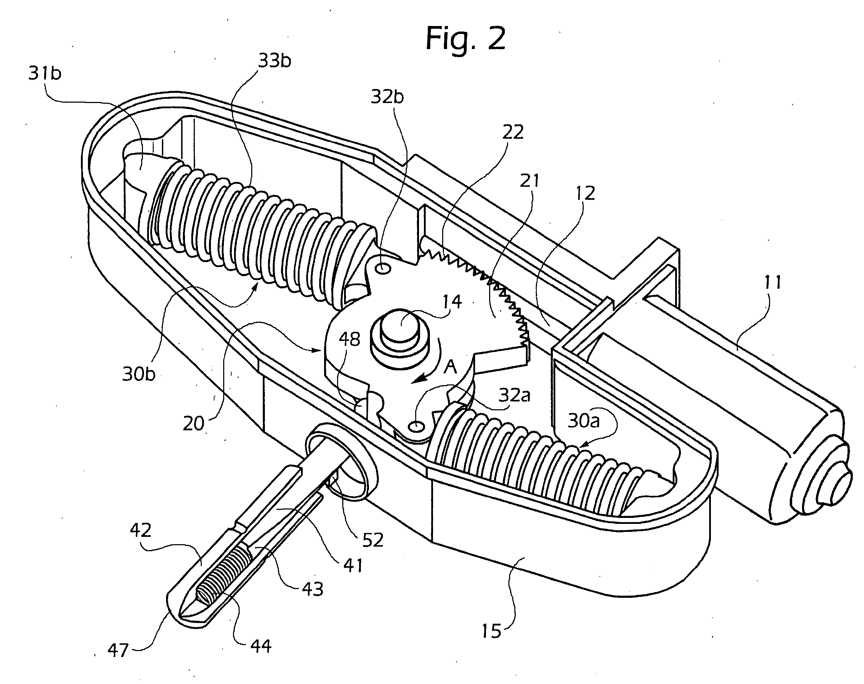

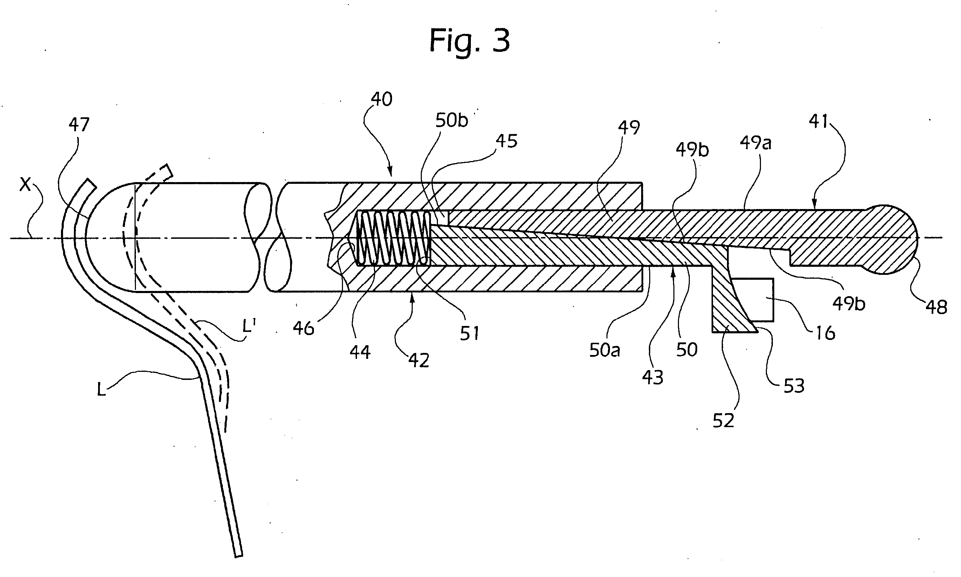

With reference to figures 1 and 2, a drive device 10 includes a crank mechanism 20 which converts the movement of the drive into a substantially linear movement of an output device 40 interposed between the drive device 10 and a clutch operating lever L (shown in figure 3). The device 40 serves to transmit to the lever L the movements that cause the disengagement of the clutch and to compensate for the wear on the clutch, as described herein after.

The drive device 10 comprises an electric motor 11 with an output worm 12 which engages with a toothed sector 22 of a wheel 21 of the crank mechanism 20, for example a worm wheel. The wheel 21 is rotatable about a pivot 14 carried by an outer casing 15.

The crank mechanism 20 is coupled to two toggle mechanisms 30a, 30b which assist in operating the clutch. A first end 31a, 31b of each of the two toggle mechanisms 30a, 30b is mounted rotatably to the casing 15, while the opposite end is hinged to the wheel 21 at points 32a, 32b for the application of a pair of auxiliary forces which impart to the wheel 21 a rotational impulse in a direction matching the direction of rotation imparted by the electric motor to cause the disengagement of the clutch. The two points of hinging 32a, 32b on the worm wheel 21 are diametrically opposed with respect to the central pivot 14, and the two toggle mechanisms are arranged axially symmetrical with respect to the pivot 14, to apply to the worm wheel 21 two forces of equal intensity, acting in opposite directions along parallel straight lines of operation. These forces are exerted by respective springs 33a and 33b.

Throughout the present description and in the following claims, terms and expressions indicating positions and orientations such as "radial", "transverse" or "axial" and "longitudinal" are considered to relate to the longitudinal axis x of the wear compensating device 40, unless specified otherwise.

The wear compensating device 40 comprises a wedge-shaped stem 41 connected to the drive device 10, a sleeve 42 acting against the clutch operating lever L, an intermediate wedge-shaped member 43 and an elastic element 44 compressed between the intermediate member 43 and the sleeve 42.

In the illustrated example, the sleeve 42 is a cylindrical tubular body with an axial cylindrical cavity 45 open towards the drive device 10 and a closed bottom 46 which constitutes an opposing wall for the elastic element 44, in the form of a helical compression spring. The sleeve 42 has a rounded outer end surface 47 which cooperates in a thrust relationship with the clutch operating lever L.

The stem 41 has a spherical or cylindrical end head 48 articulated to the wheel 21 and an elongated wedge portion 49 partially accommodated within the cylindrical cavity 45.,The wedge portion 49 has an outer side surface 49a of semi-cylindrical shape congruent with the shape of the facing cavity 45, and a substantially flat side surface 49b inclined with respect to the central longitudinal axis x of the device 40.

The intermediate member 43 has a main elongated wedge-shape portion 50 partially accommodated within the cylindrical cavity 45, a transversal end face 51 resting against the compression spring 44, an outer side surface 50a of semi-cylindrical shape congruent with the shape of the facing cavity 45, and a substantially flat side surface 50b inclined obliquely with respect to the central longitudinal axis x. The oblique surfaces 49b and 50b of the stem 41 and the intermediate member 43 are parallel and facing each other. Further, the intermediate member 43 forms a radial protrusion 52 with an essentially transversal surface 53 intended to rest against a fixed stopping tooth 16 integral with the casing 15 of the drive device.

The operation of the compensation device according to the invention is as follows.

Figure 1 shows the actuator unit in a condition in which the clutch is engaged. The two crank mechanisms 30a, 30b are in a stable limit position, aligned along two parallel straight lines, i.e. slightly beyond the dead centre in the direction opposite to the direction of rotation for disengagement of the clutch, indicated by the arrow A. The springs 33a and 33b are compressed. The clutch operating lever L urges the sleeve 42 towards the drive device 10. The axial position of the sleeve 42 is determined by the equilibrium of the opposite forces generated by the pressure spring (not shown) of the clutch and the compression spring 44. The protruding portion 52 of the intermediate member 43 abuts against the stopping tooth 16. It is important to note that in this position the stem 41 is axially released from the sleeve 42 because it is in a position slightly extracted towards the outside of the cylindrical cavity 45. In other words, the stem 41 and the intermediate member 43 are accommodated with a slight transversal play within the cavity 45.

When the clutch has to be disengaged, the drive device 10 is activated. A rotary motion imparted by the electric motor 11 to the worm screw 12 causes the worm wheel 21 to rotate in the clockwise direction A1 to disengage the clutch. Upon passing the dead centre, the springs 33a, 33b of the toggle mechanisms 30a, 30b snap into the extended configuration, thus assisting the drive 10 to cause the rapid disengagement of the clutch, even if the electric motor 11 is relatively low-powered.

The stem 41 is so pushed in a substantially linear manner towards the clutch and penetrates further into the axial cavity 45 until the oblique surfaces 49b and 50b come into contact (figure 3). Owing to the contact of the oblique surfaces, the axial thrust exerted by the stem 41 creates a radial or transversal thrust component that makes the opposite outer semi-cylindrical surfaces 49a, 50a of the stem 41 and the intermediate member 43 move away from each other. The overall transversal size of the assembly consisting of the stem 41 and the intermediate member 43 therefore increases rapidly until the opposite semi-cylindrical surfaces 49a, 50a get to lock against the cylindrical cavity surrounding them. The spring 44 cooperates in this phase by opposing the sliding movement of the intermediate member 43 in the sleeve 42 to render the tightening action of the wedge-shaped components 41 and 43 in the axial cavity 45 of the sleeve 42 more immediate.

By virtue of the reciprocal locking of the sleeve 42, the intermediate member 43 and the stem 41, a further motion imparted by the wheel 21 to the stem causes the compensating device 40 to move as a single piece towards the extended or disengaged position of the clutch.

When the clutch has to be engaged again, the motor 11 of the drive device 10 is activated inversely. The compensation device 40 as a whole is returned towards the drive device and the pressure spring of the clutch (not shown) cooperates by extending.

When the radial protrusion 52 abuts against the stopping tooth 16, further linear motion of the intermediate member 43 is impeded. This member can no longer follow the linear return motion of the stem 41, which is now released from the intermediate member 43 and the sleeve 42 and comes partially out of the cylindrical cavity 45. The spring 44 keeps the sleeve 42 pressed against the clutch lever L.

Still referring to figure 3, the wear on the clutch causes the clutch lever L to progressively assume an increasingly retracted engagement (or rest) position indicated by L'. Since the axial travel imparted by the drive 10 is constant, it is necessary to adapt the initial or rest position of the sleeve 42 to the rest position L' reached by the clutch operating lever, in order to ensure that the clutch can be completely disengaged even when it is worn.

If, therefore, owing to the wear on the clutch, the operating lever L tends to move to a new rest position L' which is progressively more advanced towards the actuator, the spring 44 is correspondingly more compressed, as it is weaker than the pressure spring (not shown) of the clutch. In the new equilibrium position of these springs, having regard to the initial non-worn position of the clutch, the sleeve 42 is shifted to a new rest position (not shown) nearer the drive device, whereby the compensating device 40 as a whole is shortened by a length corresponding to the degree of wear on the clutch. In this way the change in the final position L' of the clutch lever L due to the wear on the clutch is compensated.

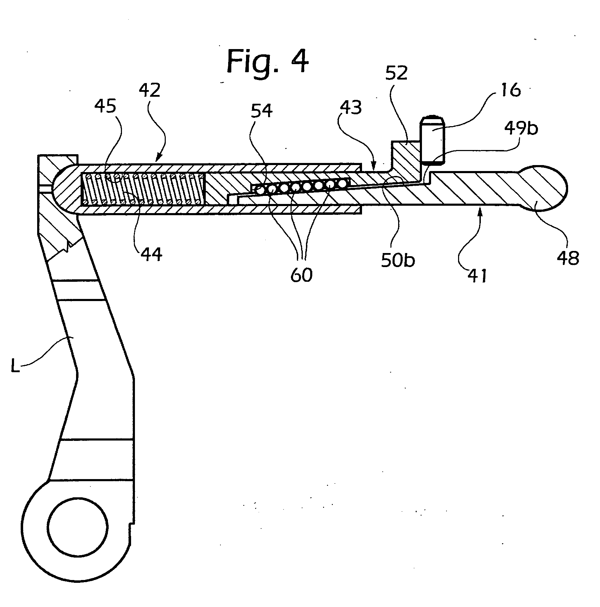

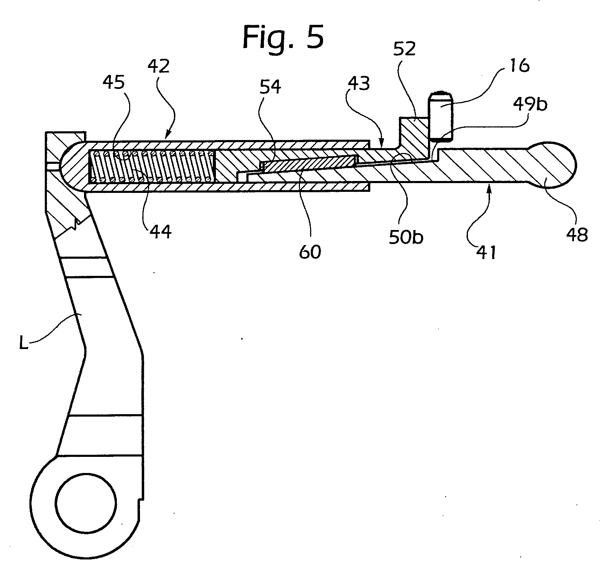

In order to reduce friction between the inclined surfaces 49b and 50b and avoid possible jamming of the wedge-shaped components 41 and 43 in the axial cavity 45 of the sleeve 42, low friction means can be interposed at the interface between the inclined surfaces 49b and 50b, or either or both of these surfaces can be made of a low-friction material. In the embodiment shown in figure 4, between the inclined surfaces 49b and 50b a set of anti-friction elements 60 is interposed, preferably rolling bodies in the form of cylindrical rollers with axes transversal to the longitudinal axis x of the device. In the example of figure 4 the anti-friction rollers 60 are accommodated in a recess 54 formed in the intermediate member 43 and open towards the inclined surface 49b of the stem 41. As an alternative to the rollers, antifriction elements equivalent thereto can for example comprise a sliding block 60 (figure 5) of low friction material (e.g. Teflon or PTFE) fitted in the recess 54 or other means for reducing friction while favouring relative longitudinal sliding movement between the stem 41 and the intermediate member 43. To this end, as a further alternative, at least one of the inclined surfaces 49b and/or 50b can be covered with a layer of low friction material, or at least one of the wedge-shaped members 41 and/or 43 can be made of a low friction material.

As will be appreciated, the wear compensating device of the present invention enables the clutch operating lever to continually reach new rest positions, determined by the progressive degree of wear on the clutch, and, by adapting itself automatically to these changes of position, ensures that the (constant) travel imparted to the stem 41 will always be sufficient to cause the complete disengagement of the clutch.

It will also be appreciated that the wear compensating device has a minimum number of components, is easily assembled and that the surfaces (45, 49a, 49b, 50b, 50a) which cooperate in effecting the reciprocal axial locking of the components 41, 42 and 43 have an extended contact area involving low contact pressure and therefore an extremely reduced wear of the device itself, which ensures reliable operation with time.

It is to be understood that the invention is not limited to the embodiments described and illustrated herein, which are to be considered as examples of the wear compensating device; in fact, the invention can be modified in respect of the form and arrangements of parts and details of construction, and in respect of its operation. For example, the transversal cross section of the cavity 45 may have shapes different from the circular one as illustrated, for example square or rectangular, and the outer side surfaces 49a, 50a cooperating with the cavity 45 as a result may be flat instead of semi-cylindrical. Similarly, the interface surfaces of the stopping tooth 16 and the protrusion 52 may for example consist of a cylindrical pin and a flat surface, so as to compensate for changes of orientation undergone by the wear compensating device during its operation.

## Claims

1. A wear compensating device (40) for a clutch in a motor vehicle, of the type including:
a first member (41) connectable to a drive (10, 20) and movable by said drive between a first position, corresponding to an engaged condition of the clutch, and a second position, corresponding to a disengaged condition of the clutch;
a second member (42) for acting against a clutch operating member (L) and having a cavity (45) elongated in an axial direction (x) accommodating partially and in movable manner the first member (41) so as to allow relative axial movement between the first (41) and the second (42) member;
a third locking intermediate member (43) for cooperating with the first (41) and the second (42) members and having a wedge-like surface (50b) inclined with respect to said axial direction (x) for cooperating with a corresponding surface of the first or second member so as to selectively lock the first member (41) to the second member (42) in the axial direction; and
an elastic means (44) axially compressed between the second hollow member (42) and the third intermediate member (43);
**characterised in that**
the first member (41) is a stem having
- an end portion (48) for connecting to said drive (10, 20) and
- an elongated portion (49) partially accommodated in the cavity (45) of the second member (42), with an outer side surface (49a) facing said cavity (45) and with a substantially flat side surface (49b) inclined obliquely with respect to the axial direction (x);
the third member (43) has a main axially elongated wedge-shaped portion (50) partially accommodated within said cavity (45) in a position transversely facing the elongated portion (49) of the first member (41), with
- an outer side surface (50a) facing said cavity (45), and
- a substantially flat side surface (50b) inclined obliquely with respect to said axial direction (x), parallel to and facing the inclined side surface (49b) of the first member (41).

2. A device according to claim 1, **characterised in that** the outer side surfaces (49a, 50a) of the first and third members (41, 43) have a shape congruent with the shape of the cavity (45) facing them.

3. A device according to claim 2, **characterised in that** the cavity (45) is an axial cylindrical cavity, and that the outer side surfaces (49a, 50a) of the first and third members (41, 43) are semi-cylindrical surfaces having a shape congruent with the shape of the cavity (45).

4. A device according to claim 1, **characterised in that** the third intermediate member (43) forms a radial protrusion (52) with a substantially transversal surface (53) for abutting against a fixed stopping means (16).

5. A device according to claim 4, **characterised in that** at least one (53) of the surfaces at the interface between the radial protrusion (52) and the fixed stopping means is a curved surface.

6. A device according to claim 1, **characterised in that** the end portion (48) of the first member is adapted for articulation to a rotatable member (20) of said drive (10, 20) .

7. A device according to claim 1, **characterised by** further including anti-friction means (60) at the interface between the inclined surfaces (49b) and (50b) of the first (41) and the third (43) members for favouring relative sliding movements between these two members (41, 43) in the axial direction (x).

8. A device according to claim 7, **characterised in that** said anti-friction means (60) include a set of rolling bodies (60) interposed between the inclined surfaces (49b) and (50b).

9. A device according to claim 8, **characterised in that** said rolling bodies (60) include cylindrical rollers (60) with axes transversal to the axial direction (x).

10. A device according to claim 8, **characterised in that** said rolling bodies (60) are at least partially accommodated in a recess (54) formed in one (43) of said first and third members (41, 43) and being open towards the inclined surface (49b) of the other (41) of said first and third members (41, 43).

11. A device according to claim 7, **characterised in that** at least one of the inclined surfaces (49b, 50b) is made of a low friction material.
